# EUROPÄISCHE PATENTSCHRIFT

(11) **EP 0 812 725 B1**
(45) Veröffentlichungstag und Bekanntmachung des Hinweises auf die Patenterteilung: **02.04.2003**
(21) Anmeldenummer: 97108284.7
(22) Anmeldetag: 22.05.1997
(51) Int. Cl.: B60N 2/48

(54) **Halterung für eine Kopfstütze eines Kraftfahrzeugsitzes**
Headrest holder for an automobile vehicle seat
Support d'appui-tête pour sièges de véhicules automobiles

(30) Priorität: 01.06.1996 DE 19622147
(43) Veröffentlichungstag der Anmeldung: 17.12.1997
(73) Patentinhaber: ADAM OPEL AG, 65423 Rüsselsheim (DE)
(72) Erfinder: Leuchtmann, Andrew, Dipl.-Ing., 55595 Mandel (DE)

(56) Entgegenhaltungen:
- EP-A- 0 088 433
- EP-A- 0 627 340
- EP-A- 0 744 316
- DE-A- 4 409 557
- DE-U- 29 613 073
- US-A- 4 577 904
- US-A- 5 056 867
- US-A- 5 156 440

## Beschreibung

Die Erfindung betrifft eine Halterung für eine Kopfstütze eines Kraftfahrzeugsitzes nach dem Oberbegriff des Patentanspruches 1.

Solche Halterungen sind in heutigen Kraftfahrzeugen vorhanden und deshalb allgemein bekannt. Bei diesen bekannten Halterungen werden beim Montieren der Kopfstütze die Kopfstützenstangen in die mit der Rückenlehne verbundenen Führungshülsen eingesteckt und darin fixiert. Die Fixierung der Kopfstützenstangen in den Führungshülsen ist in der Regel lösbar gestaltet, damit die Kopfstütze beispielsweise zum Austauschen wieder abgenommen werden kann.

Nachteilig bei derartigen Halterungen ist jedoch der hohe Herstellungs- und Montageaufwand bei den einzelnen Führungshülsen, welche separat gefertigt und einzeln an der Rückenlehne montiert werden. Weiterhin sind diese Halterungen auch mit einem hohen baulichen Aufwand verbunden, da sowohl die einzelnen Führungshülsen als auch deren Befestigungen zur sicheren Aufnahme der Kopfstütze an der Rückenlehne stabil ausgebildet werden müssen.

Aus der EP 0 627 340 A1 ist eine Halterung für eine Kopfstütze bekannt, bei der die beabstandet zueinander an der Rückenlehne angeordneten Führungshülsen um eine im oberen Bereich der Rückenlehne angeordnete horizontale Querachse schwenkbar gelagert sind. An den anderen, der Querachse abgewandten Enden sind die Führungshülsen durch einen Steg miteinander verbunden. An diesen Enden sowie auch am Steg stützen sich Aufprallmittel ab, die eine Schwenkung der Kopfstütze in Richtung des Kopfes des Sitzbenutzers im Falle eines Heckaufpralls bewirken sollen. Da sich der Steg im montierten Zustand im Innern der Rückenlehne befindet, ist eine solche Ausbildung wie auch die zuvor genannten bekannten Halterungen mit einem hohen Herstellungs- und Montageaufwand verbunden.

Die Aufgabe der vorliegenden Erfindung besteht nun darin, eine gattungsgemäße Halterung für eine Kopfstütze eines Kraftfahrzeugsitzes derart auszubilden, dass bei reduziertem baulichen Aufwand eine schnelle und sichere Montage der Halterung an der Rückenlehne möglich ist. Weiterhin soll der Bedienungskomfort der Kopfstütze mit einer solchen Halterung verbessert werden.

Diese Aufgabe wird erfindungsgemäß durch die Merkmale des Patentanspruches 1 gelöst. Dadurch weisen die Führungshülsen eine höhere Stabilität auf, so dass der bauliche Aufwand zur Befestigung der Halterung sowohl an den Führungshülsen als auch an der Rückenlehne reduziert werden kann. Die durch den Steg verbundenen Führungshülsen können somit bei der Montage in einem Arbeitsvorgang manuell oder automatisch an der Rückenlehne befestigt werden.

Weiterhin kann die erfindungsgemäße Halterung einstückig, beispielsweise aus Kunststoff, hergestellt und mit einfachen Mitteln, wie beispielsweise Rastnasen und kreisrunden Rastöffnungen, verdrehsicher an der Rückenlehne befestigt werden. Eine derartige Halterung kann auch je nach Bedarf komplett mit der Kopfstütze vormontiert sein.

Die Erfindung lässt zahlreiche Ausführungsformen zu. Zur weiteren Verdeutlichung ihres Grundprinzips ist eine davon in der Zeichnung dargestellt und nachfolgend beschrieben. Die Zeichnung zeigt teilweise schematisch in
- Fig. 1: eine räumliche Darstellung eines oberen Bereiches einer Rückenlehne mit einer noch nicht montierten erfindungsgemäßen Halterung für eine Kopfstütze;
- Fig. 2: eine in einer Führungshülse der Halterung nach Fig. 1 in einer Gebrauchsstellung verrastete Kopfstützenstange;
- Fig. 3: eine Darstellung gemäß Fig. 2, jedoch mit einer in einer ausgezogenen Position verrasteten Kopfstützenstange.

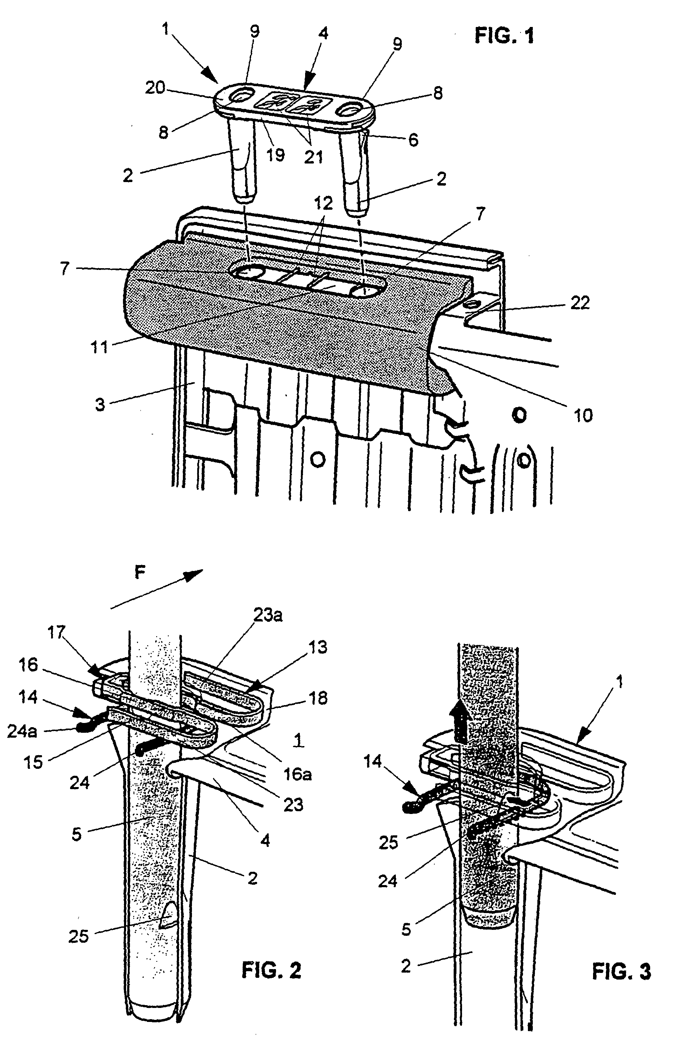

Die in Fig. 1 dargestellte Halterung 1 weist im wesentlichen zwei im oberen Bereich einer Rückenlehne 3 befestigbare Führungshülsen 2 sowie einen die beiden Führungshülsen 2 fest miteinander verbindenden Steg 4 auf. Der Steg 4 ist als eine ebene Trägerplatte 20 mit einem umlaufenden Rand 19 ausgebildet, wobei der Rand 19 zusätzlich durch Längs- und Querrippen (in der Zeichnung nicht dargestellt) mit der Trägerplatte 20 und den Führungshülsen 2 verbunden ist. Die Führungshülsen 2 und der Steg 4 sind einstückig aus Kunststoff hergestellt.

Die Verbindung der Führungshülsen 2 mit der Rückenlehne 3 ist verrastbar ausgebildet, wozu an der Rückenlehne 3 an einem Tragteil 22 Rastöffnungen 7 und an den Führungshülsen 2 Rastnasen 6 vorgesehen sind. Die Rastnasen 6 und die Rastöffnungen 7 sind derart ausgebildet, daß die Halterung 1 im befestigten Zustand spielfrei am Tragteil 22 gehaltert ist.

Zur schwenkbaren Aufnahme von in Fig. 1 nicht dargestellten Kopfstützenstangen 5 weist die jeweilige Führungshülse 2 innen am vom Steg 4 abgewandten Ende eine kreisrunde Querschnittsform und im Verbindungsbereich mit dem Steg 4 einen Querschnitt in Form eines Langloches 8 auf, wobei der Übergang zwischen der kreisrunden Querschnittsform und dem Querschnitt in Langlochform stetig gestaltet ist. Am Steg 4 ist ebenfalls jeweils ein koaxiales Langloch 9 vorgesehen, welches nach der Größe etwa dem Langloch 8 entspricht und in gleiche Richtung wie das Langloch 8 orientiert ist. Eine derartige Ausbildung ermöglicht eine begrenzte Schwenkung der Kopfstützenstange 5 in der Führungshülse 2, wobei sich der Schwenkpunkt etwa im Bereich der kreisrunden Querschnittsform befindet.

Im Befestigungsbereich der Halterung 1 ist ein als Sichtblende ausgebildetes Polsterelement 10 vorgesehen, in welchem eine Ausnehmung 11 zur Aufnahme des Steges 4 ausgespart ist. Im mittleren Bereich der Ausnehmung 11 sind zwei Drahtstege 12 vorgesehen, welche sich im montierten Zustand spielfrei zwischen dem Steg 4 und dem Tragteil 22 befinden. Das Polsterelement 10 ist somit durch den Steg 4 in allen Richtungen an der Rückenlehne 3 fixiert.

Die Fig. 2 zeigt teilweise die Halterung 1 mit einer in der Führungshülse 2 befindlichen Kopfstützenstange 5, welche mittels einer am Steg 4 in einer Ausnehmung 18 angeordneten Rastfeder 13 fixiert ist. Dazu weist die Rastfeder 13 einen U-förmigen, durch zwei etwa parallele Federschenkel 16, 16a gebildeten Abschnitt 17 auf, wovon ein Federschenkel 16 in eine Rastausnehmung 15 an der Kopfstützenstange 5 eingreift. Die Federschenkel 16, 16a sind weiterhin mit jeweils einer nach außen um 180° gebogenen federnden Verlängerung 23, 23a versehen, welche sich an den Wänden der Ausnehmung 18 mit Vorspannung abstützen und dadurch die Rastfeder 13 in der Ausnehmung 18 reibschlüssig haltern.

An der Halterung 1 ist weiterhin eine etwa U-förmig ausgebildete Sicherungsfeder 14 vorgesehen, welche gegenüber der Rastfeder 13 um etwa 90° gedreht in einer nicht dargestellten Ausnehmung am Steg 4 verrastbar angeordnet ist. Die Sicherungsfeder 14 weist zwei Schenkel 24, 24a auf, wovon ein Schenkel 24 am Schaft der Kopfstützenstange 5 mit Vorspannung anliegt. Beim Ausziehen der Kopfstützenstange 5 gelangt der Schenkel 24, wie in Fig. 3 dargestellt, in eine Rastausnehmung 25, welche am unteren Ende der Kopfstützenstange 5 auf dem Gleitweg des Schenkels 24 angeordnet ist. Auf diese Weise verhindert die Sicherungsfeder 14 ein unbeabsichtigtes Herausnehmen der in der Zeichnung nicht dargestellten Kopfstütze aus der Halterung 1.

Zum Verstellen der Kopfstütze müssen zunächst die Kopfstützenstangen 5 gemäß Pfeil F in Fig. 2 gegen die Federkraft des jeweiligen Federschenkels 16a geschwenkt werden, damit die jeweiligen Federschenkel 16 außer Eingriff mit den Rastausnehmungen 15 kommen. Dies kann auf einfache Weise von Hand durch einen leichten Druck auf die Kopfstütze erfolgen. Danach kann die Kopfstütze in beiden Richtungen beliebig verstellt werden. Zur Sicherstellung der Funktionsfähigkeit der Kopfstütze ist die Halterung 1 derart ausgebildet, daß die Schwenkung der Kopfstütze beim Verstellen in Fahrtrichtung (Pfeil F) des Kraftfahrzeuges erfolgt.

## Patentansprüche

1. Halterung (1) für eine Kopfstütze eines Kraftfahrzeugsitzes, mit zwei im oberen Bereich einer Rückenlehne (3) beabstandet angeordneten Führungshülsen (2) zum Aufnehmen von polstertragenden Kopfstützenstangen (5), wobei die Führungshülsen (2) mittels eines Stegs (4) miteinander verbunden sind, **dadurch gekennzeichnet, dass** der Steg (4) an den zur Verbindung mit der Rückenlehne (3) vorgesehenen, der aufzunehmenden Kopfstütze zugewandten Enden der Führungshülsen (2) angeordnet ist.

2. Halterung nach Anspruch 1, **dadurch gekennzeichnet, daß** sie eine Kopfstütze höhenverstellbar führt, wobei in zumindest einer Gebrauchslage der Kopfstütze jeweils eine am Steg (4) angeordnete Rastfeder (13) mit zumindest einem Federschenkel (16) in eine Rastausnehmung (15) an der jeweiligen Kopfstützenstange (5) eingreift.

3. Halterung nach Anspruch 2, **dadurch gekennzeichnet, daß** die Rastfeder (13) mit einem etwa U-förmigen Abschnitt (17) ausgebildet und in einer Ausnehmung (18) am Steg (4) form- und/oder reibschlüssig gehalten ist.

4. Halterung nach einem der Ansprüche 1 bis 3, **dadurch gekennzeichnet, daß** die Kopfstützenstangen (5) schwenkbar in den Führungshülsen (2) aufgenommen sind und der jeweilige verrastbare Federschenkel (16) der Rastfeder (13) durch Schwenkung der Kopfstützenstange (5) außer Eingriff mit der Rastausnehmung (15) gelangt.

5. Halterung nach einem der Ansprüche 2 bis 4, **dadurch gekennzeichnet, daß** am Steg (4) zum Begrenzen des Ausziehweges der Kopfstütze mindestens eine Sicherungsfeder (14) vorgesehen ist, welche mit einer weiteren Rastausnehmung (25) an der Kopfstützenstange (5) zusammenwirkt.

6. Halterung nach Anspruch 5, **dadurch gekennzeichnet, daß** die Sicherungsfeder (14) ebenfalls etwa U-förmig ausgebildet und in einer weiteren Ausnehmung am Steg (4) verrastbar aufgenommen ist.

7. Halterung nach einem der Ansprüche 1 bis 6, **dadurch gekennzeichnet, daß** der Steg (4) als eine ebene Trägerplatte (20) mit einem zumindest bereichsweise umlaufenden Rand (19) ausgebildet ist.

8. Halterung nach einem der Ansprüche 1 bis 7, **dadurch gekennzeichnet, daß** der Steg (4) und die Führungshülsen (2) werkstoffeinheitlich und einstückig ausgebildet sind.

9. Halterung nach einem der Ansprüche 1 bis 8, **dadurch gekennzeichnet, daß** auf einer bei hochgestellter Kopfstütze sichtbaren Seite des Steges (4) bildliche Hinweise (21) zum Bedienen der Kopfstütze vorgesehen sind.

10. Halterung nach einem der Ansprüche 1 bis 9, **dadurch gekennzeichnet, daß** der Steg (4) zum Fixieren von Polsterteilen (10) der Rückenlehne (3) ausgebildet ist.

## Claims

1. Support (1) for a headrest of a motor vehicle seat, with two guide sleeves (2) spaced apart in the upper region of a backrest (3) for receiving upholstery-carrying headrest rods (5), wherein the guide sleeves (2) are connected to each other by means of a web (4), **characterised in that** the web (4) is arranged at the ends of the guide sleeves (2) facing towards the headrest to be received and provided for connection to the backrest (3).

2. Support according to claim 1, **characterised in that** it carries a headrest vertically adjustably, wherein, in at least one working position of the headrest, in each case a latch spring (13) arranged on the web (4) with at least one spring arm (16) engages in a latch recess (15) on the respective headrest rod (5).

3. Support according to claim 2, **characterised in that** the latch spring (13) is constructed with an approximately U-shaped section (17) and held in a recess (18) on the web (4) in form-locking and/or friction-locking relationship.

4. Support according to any of claims 1 to 3, **characterised in that** the headrest rods (5) are received pivotably in the guide sleeves (2) and the respective latchable spring arm (16) of the latch spring (13) becomes disengaged from the latch recess (15) by pivoting of the headrest rod (5).

5. Support according to any of claims 2 to 4, **characterised in that** on the web (4) for limiting the pull-out path of the headrest there is provided at least one locking spring (14) which cooperates with a further latch recess (25) on the headrest rod (5).

6. Support according to claim 5, **characterised in that** the locking spring (14) is likewise of approximately U-shaped construction and received latchably in a further recess on the web (4).

7. Support according to any of claims 1 to 6, **characterised in that** the web (4) is constructed as a planar carrier plate (20) with an at least partially circumferential edge (19).

8. Support according to any of claims 1 to 7, **characterised in that** the web (4) and the guide sleeves (2) are constructed of a single material and in one piece.

9. Support according to any of claims 1 to 8, **characterised in that** on one side of the web (4) which is visible when the headrest is raised are provided pictorial instructions (21) for operation of the headrest.

10. Support according to any of claims 1 to 9, **characterised in that** the web (4) is designed for fixing upholstery portions (10) of the backrest (3).

## Revendications

1. Support (1) pour un appui-tête d'un siège de véhicule automobile, comportant deux manchons de guidage (2) disposés à distance l'un de l'autre dans la région supérieure d'un dossier de siège (3), pour recevoir des tiges d'appui-tête (5) qui supportent un coussin d'appui-tête, les manchons de guidage (2) étant liés l'un à l'autre par une barrette (4), **caractérisé en ce que** la barrette (4) est disposée aux extrémités prévues pour la fixation au dossier de siège (3), tournées vers l'appui-tête, des manchons de guidage (2).

2. Support selon la revendication 1, **caractérisé en ce qu'**il supporte un appui-tête avec possibilité de réglage en hauteur, dans au moins une position d'utilisation de l'appui-tête, un ressort d'encliquetage (13) placé sur la barrette (4) venant en prise par au moins une aile de ressort (16) avec une échancrure d'encliquetage (15) aménagée sur la tige d'appui-tête (5) concernée.

3. Support selon la revendication 2, **caractérisé en ce que** le ressort d'encliquetage (13) comprend une partie (17) sensiblement en forme de U et est tenu dans un évidement (18) de la barrette (4) par complémentarité de formes et/ou par frottements.

4. Support selon une des revendications 1 à 3, **caractérisé en ce que** les tiges d'appui-tête (5) sont montées avec possibilité de pivotement dans les manchons de guidage (2) et **en ce que** l'aile (16) encliquetable du ressort d'encliquetage (13) est amenée hors de prise d'avec l'échancrure d'encliquetage (15) par pivotement de la tige d'appui-tête (5).

5. Support selon une des revendications 2 à 4, **caractérisé en ce qu'**il est prévu sur la barrette (4), pour limiter la course de sortie de l'appui-tête, au moins un ressort de retenue (14) qui coopère avec une échancrure d'encliquetage (25) supplémentaire aménagée sur la tige d'appui-tête (5).

6. Support selon la revendication 5, **caractérisé en ce que** le ressort de retenue (14) a également une forme de U et est tenu par encliquetage dans un évidement supplémentaire de la barrette (4).

7. Support selon une des revendications 1 à 6, **caractérisé en ce que** la barrette (4) est conformée en plaque-support (20) plane avec au moins par endroits un bord (19) continu.

8. Support selon une des revendications 1 à 7, **caractérisé en ce que** la barrette (4) et les manchons de guidage (2) sont réalisés d'une pièce, en un même matériau.

9. Support selon une des revendications 1 à 8, **caractérisé en ce qu'**il est prévu sur une face de la barrette (4) visible lorsque l'appui-tête est en position haute, des pictogrammes (21) pour l'utilisation de l'appui-tête.

10. Support selon une des revendications 1 à 9, **caractérisé en ce que** la barrette (4) est agencée pour fixer des éléments de coussin (10) du dossier (3).
